**Europäisches Patentamt**

(19) **European Patent Office**

**Office européen des brevets**

(11) Veröffentlichungsnummer : **0 221 115 B1**

(12) **EUROPÄISCHE PATENTSCHRIFT**

(45) Veröffentlichungstag der Patentschrift :
19.07.89

(51) Int. Cl.⁴ : **B 29 C 67/22**

(21) Anmeldenummer : 86902763.1

(22) Anmeldetag : 28.04.86

(86) Internationale Anmeldenummer :
**PCT/AT 86/00036**

(87) Internationale Veröffentlichungsnummer :
**WO/8606681 (20.11.86 Gazette 86/25)**

(54) VERFAHREN ZUM AUFTRAGEN VERSCHÄUMTER MEDIEN.

(30) Priorität : 03.05.85 AT 1336/85

(43) Veröffentlichungstag der Anmeldung :
13.05.87 Patentblatt 87/20

(45) Bekanntmachung des Hinweises auf die Patenterteilung : 19.07.89 Patentblatt 89/29

(84) Benannte Vertragsstaaten :
DE NL

(56) Entgegenhaltungen :
EP--A-- 0 059 647
EP--A-- 0 108 920
CH--A-- 450 703
GB--A-- 1 046 077
GB--A-- 1 203 200
US--A-- 3 891 368
US--A-- 4 086 377
US--A-- 4 260 351
US--A-- 4 354 810
US--A-- 4 365 968

(73) Patentinhaber : **Zimmer, Johannes**
**Ebentaler Strasse 133**
**A-9020 Klagenfurt (AT)**

(72) Erfinder : **Zimmer, Johannes**
**Ebentaler Strasse 133**
**A-9020 Klagenfurt (AT)**

(74) Vertreter : **Puchberger, Rolf, Dipl. Ing. et al**
**Patentanwälte Dipl. Ing. Rolf Puchberger Dipl. Ing.**
**Georg Puchberger Singerstrasse 13**
**A-1010 Wien (AT)**

Jouve, 18, rue St-Denis, 75001 Paris, France

## Beschreibung

Die Erfindung betrifft ein Verfahren zur Auftragung verschäumter Medien in variierbarer, prozeßanpassender Auftragsmenge und mit variierbarem Auftragungsdruck auf Flächen oder bahnförmiges Material mit variierbarer Bahngeschwindigkeit, wobei das Auftragsmedium unter Druck stehend in einem geschlossenen Geräte- und Rohrleitungssystem von der Druckerzeugungsstelle (dynamischer oder statischer Schaumenerator) zur vorzugsweise spaltförmigen Austritts- und Auftragungsstelle befördert wird (EP-A-59 647).

Nach dem bisherigen Stand der Technik erfolgt die Proportionalsteuerung der Schaumerzeugungsmenge entweder in empirischer Anpassung an die jeweilige Maschinen- bzw. Bahnengeschwindigkeit oder mittels eines automatischen Prozeßrechners, in den die gewünschte Flächenbedeckungsmenge (z. B. g/m²), die Bahnbreite und bei Schablonenbemusterung gegebenenfalls auch der jeweilige musterabhängige Flächenbedeckungsgrad in Prozenten eingegeben wird, wobei der Prozeßrechner mit einer vorgewählten Geschwindigkeit programmiert wird und mit den daraus errechneten Steuerungsdaten beide Antriebssysteme für Bahngeschwindigkeit und Mixerleistung gleichzeitig ansteuert. Eine andere Möglichkeit ist die, daß die jeweils gewünschte Maschinen- bzw. Bahngeschwindigkeit eingestellt bzw. prozeßabhängig verändert wird und daß der Prozeßrechner dieser jeweiligen Bahngeschwindigkeits-Einstellung folgend, die zugehörige proportionale Mixerleistung errechnet und den Mixer dementsprechend ansteuert. Aus der EP-A-59 647 ist bereits ein Verfahren bekannt, bei dem zum Auftragen einer fließfähigen Substanz auf eine Warenbahn die Geschwindigkeit der Bahn gemessen und der Meßwert einem Steuermodul zugeführt wird. Unter Berücksichtigung der Breite und des Gewichtes des Gewebes steuert dieser Modul dann ein Ventil, über das einem Schaumerzeuger mehr oder weniger Substanz zugeführt wird und so die Menge des erzeugten Schaumes gesteuert werden kann. Hier wird also auch erst die Geschwindigkeit geändert und durch diese Geschwindigkeitsänderung dann eine Änderung der Leistung des Schaumgenerators hervorgerufen.

Schaum ist in der Praxis insofern schwierig zu handhaben, weil dieses Medium in Abhängigkeit von Dichte und Viskosität der verschäumten Flüssigkeit, von seinem Flüssigkeits- und Luftanteil und von der Schaumerzeugungs-Einrichtung abhängigen Bläschengröße, in seinem Verhalten unterschiedlich, sowohl wie ein flüssiges als auch wie ein gasförmiges Medium gleichzeitig reagiert. Steuerungsprozesse für die geschwindigkeitsanpassende Änderung der Schaumerzeugungsmengen sind deshalb besonders schwierig zu bewältigen, weil die Schaumerzeugungseinrichtungen und die Schaumförder- und Breitenverteilungssysteme mit Verzögerungen reagieren, deren zeitliches Ausmaß je nach Luftanteil, Viskosität, Querschnitt-Beschaffenheit und Länge der Förderleitungen und jeweiliger Fördermenge unterschiedlich und nicht exakt vorausbestimmbar sind.

Die für einen bestimmten Auftragsvorgang gewünschte qualitätsbestimmende Flächenbedeckungsmenge läßt sich nach dem bisherigen Stand der Technik nur bei gleichförmiger Geschwindigkeit erzielen, d. h. qualitätsmindernde Auftragungsunterschiede sind während der gesamten Zeitdauer der Geschwindigkeitsveränderung unvermeidbar. Da die Geschwindigkeitsveränderungen bei größeren Produktionsanlagen meistens nur langsam möglich sind, müssen in der Praxis oft beträchtliche Mengen an qualitätsgeminderten Produktionsergebnissen in Kauf genommen werden. Hieraus folgend wird die Schaumtechnologie nach dem bisherigen Stand der Technik für kleine bis mittlere Produktionsmengen sehr in Frage gestellt.

Es ist Aufgabe der Erfindung, die bisherigen Nachteile des Standes der Technik zu vermeiden. Erfindungsgemäß wird bei dem eingangs erwähnten Verfahren vorgeschlagen, daß zwecks Änderung der Bahnengeschwindigkeit unter Beibehaltung der vorgewählten Auftragungsmenge (z. B. g/m²) mittels Programmsteuerung zuerst die Leistung der Schaumerzeugungsstelle geändert und, daran anpassend, in Folgesteuerung, auf Grundlage einer Druck-Istwertmessung an oder nahe der Auftragungsstelle die Bahnengeschwindigkeit proportional zu diesem Druck-Istmeßwert geändert wird, und zwar bis zur Angleichung dieses Druck-Istmeßwertes an den eingestellten Druck-Sollwert.

Durch die Erfindung sind die technischen bzw. wirtschaftlichen Nachteile, die dem bisherigen Stand der Technik anhaften, beseitigt, indem durch das neue Verfahren in Verbindung mit entsprechenden Vorrichtungen auch während der Zeit, in der Bahngeschwindigkeitsveränderungen erfolgen, flächenkonstante Auftragungswerte erzielt werden.

Bei der vorliegenden Erfindung wird vorzugsweise der Druck kontrolliert und insbesondere wird die Druckveränderungstendenz (druckansteigend oder druckfallend) festgestellt, wobei die Möglichkeit besteht, gewünschten Geschwindigkeitsänderungen entsprechende Druckmessungssollwerte vorzugeben, denen in Folgesteuerung zuerst die Schaummengenförderung und sodann die Bahngeschwindigkeit zu folgen haben.

Man kann einen größeren Änderungswert vorgeben, der dann durch ein Steuer-, Meß- und Rückmeldesystem in eine Vielzahl kleinerer Änderungsschritte zerlegt wird. Man kann die Druckmessung sehr fein einstellen, so daß bereits geringfügige Druckänderungen (die entweder durch Fördermengen- oder Geschwindigkeitsänderungen verursacht sein können) einen Steuerimpuls auslösen.

Selbstverständlich ist eine Druckmessung nur möglich, wenn das gesamte Auftragungssystem vom Schaumgenerator bis zur Auftragungsstelle geschlossen ist, d. h., die Auftragung muß aus einem Spalt erfolgen, dessen Ränder abdichtend an der Auftragungszone oder Schablone anliegen. Die flächenberührenden Ränder können aus einem elastischen, rakelähnlichen Streifen gebildet werden, der über die gesamte Auftragsbreite reicht. Auch die Verwendung von formstabilem Material ist möglich. Wenn man die an der zu beauftragenden Fläche bzw. an der Schablone anliegenden Teile breitflächig ausführt, so braucht die Auftragungsvorrichtung die Auftragungsfläche oder Schablone nicht direkt berühren, sondern es kann sich zwischen diesen beiden Flächen immer ein Auftragsmedium befinden, das dann praktisch als Abdichtungs- und Schmiermittel wirkt. Um eine gleichmäßige Auftragung zu gewährleisten, kann in die Auftragsvorrichtung eine Breitenverteilungseinrichtung eingebaut sein oder die Auftragungsvorrichtung kann mit einer Breitenverteilungseinrichtung fest verbunden werden. Es ist auch möglich, daß man die Druck-Meßsignale nicht nur der Steuerungseinrichtung zuführt, sondern zusätzlich auch noch einem Anzeigegerät zuführt.

**Patentansprüche**

1. Verfahren zur Auftragung verschäumter Medien in variierbarer, prozeßanpassender Auftragsmenge und mit variierbarem Auftragungsdruck auf Flächen oder bahnförmiges Material mit variierbarer Bahngeschwindigkeit, wobei das Auftragsmedium unter Druck stehend in einem geschlossenen Geräte- und Rohrleitungssystem von der Druckerzeugungsstelle (dynamischer oder statischer Schaumgenerator) zur vorzugsweise spaltförmigen Austritts- und Auftragungsstelle befördert wird, dadurch gekennzeichnet, daß zwecks Änderung der Bahnengeschwindigkeit unter Beibehaltung der vorgewählten Auftragungsmenge (z. B. g/m²) mittels Programmsteuerung zuerst die Leistung der Schaumerzeugungsstelle geändert und, daran anpassend, in Folgesteuerung, auf Grundlage einer Druck-Istwertmessung an oder nahe der Auftragungsstelle die Bahnengeschwindigkeit entsprechend zu diesem Druck-Istmeßwert geändert wird, und zwar bis zur Angleichung dieses Druck-Istmeßwertes an den eingestellten Druck-Sollwert.

2. Verfahren nach Anspruch 1, dadurch gekennzeichnet, daß ein größerer Änderungswert vorgegeben wird, der durch ein automatisches Steuer-Meß- und Rückmeldesystem, das sodann einen weiteren Steuerimpuls auslöst, in eine Vielzahl kleiner Änderungsschritte zerlegt wird.

3. Verfahren nach Anspruch 1 oder 2, dadurch gekennzeichnet, daß Mengenänderungen in der Mediumzuführung ebenso wie Bahngeschwindigkeitsänderungen als Druckänderungen gemessen und die Druckmeßwerte zu Regel- und Steuerimpulsen umgeformt werden.

4. Verfahren nach einem der vorhergehenden Ansprüche, dadurch gekennzeichnet, daß die Druckänderungstendenz (drucksteigend oder druckfallend) festgestellt wird und in die Programmsteuerung eingegeben wird.

5. Verfahren nach einem der vorhergehenden Ansprüche, dadurch gekennzeichnet, daß Druckmessungs-Sollwerte vorgegeben werden, denen — in Folgesteuerung — zuerst die Schaummengenförderung und sodann die Bahngeschwindigkeit folgen.

6. Verfahren nach einem der vorhergehenden Ansprüche, dadurch gekennzeichnet, daß die Ränder der Austrittsöffnung dichtend an der zu beauftragenden Fläche bzw. gegebenenfalls Schablone in Kontakt gebracht werden.

7. Verfahren nach Anspruch 6, dadurch gekennzeichnet, daß die flächenberührenden Ränder aus über die gesamte Auftragungsbreite reichenden, elastischen, rakelähnlichen Streifen gebildet werden.

8. Verfahren nach Anspruch 6, dadurch gekennzeichnet, daß die flächenberührenden Ränder aus über die gesamte Auftragungsbreite reichenden, formstabilen (starren) Material gefertigt werden.

9. Verfahren nach einem der vorhergehenden Ansprüche, dadurch gekennzeichnet, daß die an der zu beauftragenden Fläche bzw. an der Schablone anliegenden Teile breitflächig ausgeführt werden.

10. Verfahren nach Anspruch 9, dadurch gekennzeichnet, daß der breitflächig ausgeführte, unmittelbar an den Austrittsspalt anschließende, flächenförmig ausgebildete Berührungsbereich der Auftragungsvorrichtung die Auftragungsfläche nicht direkt berührt, sondern der Berührungskontakt zwischen den beiden Flächen nur durch das Auftragungsmedium bewirkt wird.

11. Verfahren nach einem der vorhergehenden Ansprüche, dadurch gekennzeichnet, daß die Berührungsfläche als Gleitfläche und das Medium als abdichtendes Schmiermittel wirkt.

12. Verfahren nach einem der vorhergehenden Ansprüche, dadurch gekennzeichnet, daß die Druckmeßsignale einer Steuereinrichtung bzw. zusätzlich auch einem ablesbaren Anzeigegerät zugeleitet werden.

**Claims**

1. A method of applying foamed media in variable application quantities adjusting to the process and with variable application pressure to surfaces or material in web form having variable web speed, the application medium being delivered under pressure in a closed apparatus and pipeline system from the pressure generator (dynamic or static foam generator) to a preferably gap-shaped exit and application station, characterised in that for the purpose of varying the web speed while maintaining the preselected application quantity (e.g. g/m²) by program control means the output of the foam generating station is first changed and, in adaptation thereto, in sequential control, on the basis of an actual-value measurement of the pressure at or near the application station the web speed is changed to correspond to this actual pressure measurement until such measurement is equal to the set-value for the pressure.

2. A method according to claim 1, characterised in that a higher change value is input and is broken down into a plurality of small change increments by an automatic control, measuring and reporting system which then triggers another control pulse.

3. A method according to claim 1 or 2, characterised in that quantitative changes in the medium supply like changes in the web speed are measured as pressure changes and the pressure measurements are converted to regulating and control pulses.

4. A method according to any one of the preceding claims, characterised in that the trend of the pressure change (increasng or decreasing pressure) is detected and input to the program control means.

5. A method according to any one of the preceding claims, characterised in that pressure measurement set-values are input and are followed — in the sequential control — first by the foam quantity delivery and then the web speed.

6. A method according to any one of the preceding claims, characterised in that the edges of the exit aperture are brought sealingly into contact with the surface or possibly a stencil to which the application is to be made.

7. A method according to claim 6, characterised in that the surface-contacting edges are formed by elastic doctor-like strips extending over the entire application width.

8. A method according to claim 6, characterised in that the surface-contacting edges are made from shape-stable (rigid) material extending over the entire application width.

9. A method according to any one of the preceding claims, characterised in that the parts bearing against the surface or stencil to which the application is to be made are of broad area.

10. A method according to claim 9, characterised in that the broad area flat contact zone of the application system immediately adjoining the exit gap does not contact the application surface directly and instead the contact is produced between the two surfaces only by the application medium.

11. A method according to any one of the preceding claims, characterised in that the contact surface acts as a sliding surface and the medium acts as a sealing lubricant.

12. A method according to any one of the preceding claims, characterised in that the pressure measurement signals are fed to a control device or additionally to a readable display unit.

## Revendications

1. Procédé pour appliquer des matières sous forme de mousse en une quantité d'application variable et qui s'adapte au processus et avec une pression d'application variable sur des surfaces ou un matériau sous forme de bande avec une vitesse de bande variable, la matière d'application, sous pression, étant transportée dans un système fermé de conduites et d'appareils depuis le poste de mise en pression (générateur de mousse dynamique ou statique) jusqu'au poste de sortie et d'application de préférence en forme de fente, caractérisé en ce que, afin de modifier la vitesse de bande en conservant la quantité d'application (par exemple g/m$^2$) choisie au préalable au moyen d'une commande à programme, la capacité du poste de production de la mousse est tout d'abord modifiée et, de façon adaptée à celle-ci, en commande séquentielle, sur la base d'une mesure de la valeur instantanée de la pression au niveau ou à proximité du poste d'application, la vitesse de bande est modifiée en fonction de cette valeur effective mesurée de la pression, et ceci jusqu'à égalisation de cette valeur effective mesurée de la pression avec la valeur de consigne de la pression établie.

2. Procédé selon la revendication 1, caractérisé en ce qu'une valeur de modification plus grande est donnée au préalable, qui est fractionnée en une pluralité de pas de modification plus petits par un système automatique de mesure de commande et de retour qui déclenche ensuite une autre impulsion de commande.

3. Procédé selon les revendications 1 ou 2, caractérisé en ce que des modifications de quantité dans l'alimentation en matière de même que des modifications de vitesse de bande sont mesurées en tant que modifications de pression et que les valeurs mesurées de pression sont converties en des impulsions de régulation et de commande.

4. Procédé selon l'une des revendications précédentes, caractérisé en ce que la tendance aux modifications de pression (en montée ou en baisse de pression) est déterminée et est introduite dans la commande à programme.

5. Procédé selon l'une des revendications précédentes, caractérisé en ce que des valeurs de consigne de mesure de pression sont données au préalable que suivent, en commande séquentielle, d'abord le transport des quantités de mousse puis la vitesse de bande.

6. Procédé selon l'une des revendications précédentes, caractérisé en ce que les bords de l'ouverture de sortie sont amenés en contact étroit au niveau de la surface, ou éventuellement du gabarit, qui doit recevoir l'application.

7. Procédé selon la revendication 6, caractérisé en ce que les bords en contact avec la surface sont formés par des bandes élastiques en forme de racloir qui atteignent toute la largeur d'application.

8. Procédé selon la revendication 6, caractérisé en ce que les bords en contact avec la surface sont réalisés en une matière de forme stable (rigide) qui atteint toute la largeur d'application.

9. Procédé selon l'une des revendications précédentes, caractérisé en ce que les parties qui sont adjacentes à la surface qui doit recevoir l'application ou au gabarit sont à surface large.

10. Procédé selon la revendication 9, caractérisé en ce que le domaine de contact du dispositif d'application qui est réalisé à surface large, sous forme d'une surface et qui est raccordé immédiatement à la fente de sortie, n'est pas en contact direct avec la surface qui doit recevoir l'application, le contact entre les deux surfaces n'étant réalisé que par la matière d'application.

11. Procédé selon l'une des revendications précédentes, caractérisé en ce que la surface de contact agit comme surface de glissement et la matière comme lubrifiant d'étanchéité.

12. Procédé selon l'une des revendications précédentes, caractérisé en ce que les signaux de mesure de pression sont envoyés à une installation de commande ou en addition également à un appareil d'affichage susceptible de lecture.